# EUROPEAN PATENT SPECIFICATION

(11) **EP 0 669 804 B1**
(45) Date of publication and mention of the grant of the patent: **29.07.1998**
(21) Application number: 94901554.9
(22) Date of filing: 16.11.1993
(51) Int. Cl.: A01N 63/00

(54) **SYNERGISTIC MICROBICIDAL COMPOSITIONS**
SYNERGITISCHE MIKROBIZIDE MITTEL
COMPOSITIONS MICROBICIDES SYNERGIQUES

(30) Priority: 17.11.1992 US 977318
(43) Date of publication of application: 06.09.1995
(60) Divisional application: 98100056.5
(73) Proprietor: Novartis AG, 4058 Basel (CH)
(72) Inventor: BECKER, J., Ole, Riverside, CA 92506 (US); TORKEWITZ, Nancy, R., Hurdle Mills, NC 27514 (US); MORTON, H., Vince, Reidsville, NC 27320 (US)
(86) International application number: US9311150
(87) International publication number: WO9410845

(56) References cited:
- EP-A- 0 106 504
- EP-A- 0 170 139
- EP-A- 0 472 494
- US-A- 4 975 277
- SOIL BIOL. BIOCHEM., vol.21, no.8, 1989, GB pages 1019 - 1025 P.G.BRISBANE ET. AL. 'Inhibition of fungi from wheat roots by Pseudomonas fluorescens 2-79 and fungicides'

## Description

The present invention relates to compositions comprising bacterial strains in combination with synthetic pesticidal compounds which are effective for the control of plant pests and pathogens.

In order to achieve effective control of fungal pathogens via biological control, it is important that a certain level of inhibitory bacteria be achieved. However, it may be difficult to obtain a level of bacteria sufficient to achieve effective control of plant pathogens through biocontrol alone. Furthermore, it may not be economically feasible to apply a large enough population of bacteria to achieve effective control. Thus, it is desirable to obtain combinations of bacterial biocontrol strains with other means for control of plant pathogens, particularly fungi, such as Rhizoctonia solani and Pythium ultimum, in which lower levels of Pseudomonas bacteria are able to effectively control the plant pathogens.

It has become known from EP-A-472,494 that purified bacterial strains of the species Pseudomonas fluorescens are effective for the inhibition of plant pathogenes and that compositions comprising a microbicidal Pseudomonas fluorescens strain in combination with a synthetic microbicide of the acylalanine type, in particular metalaxyl, furalaxyl, oxadixyl, benalaxyl or ofurace, are useful for controlling fungi.

Surprisingly it has been found that compositions which comprise, as active ingredients, an effective amount of at least one bacterial biocontrol strain of the genus Pseudomonas in combination with a halogenated nitrobenzene, display synergistic effects which allow for effective control using lower concentrations of microbicidal compounds, be that the Ps.organism or the microbicidal partner from chemical synthesis.

The combinations of the present invention are important for several reasons. First, Rhizoctonia solani is a particularly pernicious plant pathogen. The affected plants include ornamentals, vegetables, beans, wheat, tomato, potato and cotton. Secondly, presently available fungicide treatments are expensive, and may not provide efficiently for the protection of crops from Rhizoctonia solani. Therefore, the use of combinations of biocontrol agents and chemical microbicides to control or prevent pest infections in crop plants and other plants may provide an environmentally safe, economical and efficient method of control of plant pathogens such as Rhizoctonia solani. In addition, the compositions of the present invention can be used in mixtures in conjunction with bacterial strains that otherwise are not effective biocontrol agents for the particular plant pest. For example, the compositions can be used with strains that otherwise are not effective biocontrol agents for Rhizoctonia solani and Pythium ultimum and thereby increase the effective range of these biocontrol strains. The use of the biocontrol agents of the present invention in mixtures in order to improve the biocontrol capabilities of other strains of rhizosphere biocontrol agents is also a part of the present invention.

For example, US Patent No. 4,456,684, (Weller et al.) discloses that take-all, a disease of wheat caused by the fungus Gaeumannomyces gramminis, can be controlled in some cases by the application of bacteria inhibitory to this pathogen to wheat seeds prior to planting. However, where the growth of G. gramminis is effectively under control, R. solani may become a growing problem pathogen of wheat. Thus, the biocontrol agents of the present invention can be used together with biocontrol agents intended to protect wheat from take-all and extend their range of effectiveness to include R. solani and P. ultimum.

Methods are available in the art for selecting and isolating bacterial strains which can suppress and control plant pathogens; for Example EP-A- 472,494 (U.S. application Serial No. 705,424).

A number of such organisms are reported in the literature. See, for example, U.S. patent Nos. 4,900,348; 4,642,131; 4,975,277; 4,751,081; 4,714,614; 4,456,684; 4,647,533; 4,569,841; and 4,479,936; as well as EPA 0 376,775; EPA 0 353,689; WO91/05475; and EPA 0 200,344.

The structure of one of several antibiotic compounds produced by the biocontrol agent has been identified as that of the compound pyrrolnitrin. The structure of pyrrolnitrin and a proposed pathway for its biosynthesis from L-tryptophan is disclosed by Chang et al., J. Antibiot., 5: (1981). Pyrrolnitrin has previously been identified as an effective antifungal agent. See, for example, US Patent No.4,636,520.

The term 'biocontrol agent', as used throughout the present specification and the claims, encompasses purified biological disease controlling bacterial strains alone, referred to as biocontrol strains, or in combination with one or more synthetic chemical pesticides. The term biocontrol agent further includes the active compound produced by, or extracted from, the biocontrol strains, including antifungal, antibacterial, and other pesticidal metabolites, such as antibiotic compounds, whether used alone or in combination with one or more synthetic chemical compounds.

There is some uncertainty as to whether the Pseudomonas strains described herein belong to the species Pseudomonas fluorescens or Pseudomonas aurantiaca. In the present specification and the claims the term Pseudomonas fluorescens encompasses as well the species Pseudomonas aurantiaca.

The following preferred bacterial strains of Pseudomonas fluorescens have been deposited with the American Type Culture Collection in Rockville, Maryland on April 24, 1991:
CGA 266446 (ATCC Accession No. 55171);
CGA 266447 (ATCC Accession No. 55170);
CGA 267356 (ATCC Accession No. 55169);
CGA 270293 (ATCC Accession No. 55175);
CGA 270294 (ATCC Accession No. 55174); and
CGA 281836 (ATCC Accession No. 55168).

A preferred embodiment of this invention is a composition, wherein the synthetic microbicidal compound is
pentachloronitrobenzene (common name: quintozene).

When used in combination with either of the Ps.strains synthetic microbicides can usually be applied in lower rates of application thereby still being sufficiently active.

The active ingredients of the present invention are normally applied in the form of compositions and can be applied to the crop area or plant to be treated, simultaneously or in succession, with other compounds. These compounds can be both fertilizers or micronutrient donors or other preparations that influence plant growth. They can also be selective herbicides, insecticides, fungicides, bactericides, nematicides, molluscides or mixtures of several of these preparations, if desired, together with further agriculturally acceptable carriers, surfactants or application-promoting adjuvants customarily employed in the art of formulation. Suitable carriers and adjuvants can be solid or liquid and correspond to the substances ordinarily employed in formulation technology, e.g. natural or regenerated mineral substances, solvents, dispersants, wetting agents, tackifiers, binders or fertilizers. Examples for microbicides are:
(E)-methyl 2-(2-(6-(2-cyanophenoxy)pyrimidin-4-yloxy)-phenyl)-3-methoxypropenoate (+)-cis-1(-4-chlorophenyl)-2-(1H-1,2,4-triazol-1-yl)-oxiran-2-ylmethyl)-1H-1,2,4-triazole, (RS)-1-aminopropyl- phosphonic acid, (RS)-4-(4-chloro-phenyl)-2-phenyl-2-(1H-1,2,4,-triazol-1-ylmethyl)butyronitrile (Z)-N-but-2-enyloxymethyl-2-chloro-2',6'-diethylacetanilide, 1-(2-cyano-2-methoxyiminoacetyl)-3-ethyl urea, 3-(2,4-dichlorophenyl)-2-(1H-1,2,4-triazol-1-yl)quinazolin-4(3H)-one, 4-bromo-2-cyano-N,N-dimethyl-6-triflouromethyl-benzimidazole-1-sulphonamide,5-ethyl-5,8-dihydro-8-oxo-(1,3)-dioxol-(4,5-g) guinoline-7-carboxylic acid,a-[N-(3-chloro-2,6-xylyl)-2-methoxyacetamido)-butyrolactone, alanycarb, aldimorph, ampropylfos, anilazine, azaconazole, benomyl, biloxazol, binapacryl, bitertanol, blasticidin S, bromuconazole, bupirimate, butenachlor, buthiobate, captafol, captan, carbendazim, carbendazim chlorhydrate, chinomethionate, chlorbenzthiazone, chloroneb, chlorothalonil, chlorozolinate, clozylacon, copper containing compounds such as copper oxychloride, copper oxyquinolate, copper sulphate and Bordeaux mixture, cycloheximide, cymoxanil, cyproconazole, di-2-pyridyl disulphide 1,1'-dioxide, dichlofluanid, dichlone, diclobutrazol, diclomezine, dicloran, didecyl dimethyl ammonium chloride, diethodencarb, difenoconazole, O,O-di-iso-propyl-S-benzyl thiophosphate, dimefluazole, dimetconazole, dimethomorph, dimethirimol, diniconazole, dinocap, dipyrithione, ditalimfos, dithianon, dodemorph, dodine, doguadien, edifenphos, epoxyconazole etaconazole, ethirimol, ethoxyguin, ethyl (2)-N-benzyle-N-([methyl(methylthioethylideneamino-oxy-carbon y l)amino]thio)-b-alaninate, etridiazole, fenaminosulph, fenapanil, fenarimol, fenbuconazole, fenfuram, fenpropidin, fenpropimorph, fentin acetate, fentin hydroxide, ferbam, ferimzone, fluazinam, fluoroimide, fluotrimazole, dilutolanil, flutriafol, flusilazole, folpet, fuberidazole, furconazole-cis, guazatine, hexaconazole, hydroxyisoxazole, hymexazole, imazalil, imibenconazole, ipconazole, iprobenfos, iprodione, isopropanyl butyl carbamate, isoprothiolane, kasugamycin, mancozeb, maneb, mepanipyrim, mepronil, methfuroxam, metiram, metiram-zinc, metsulfovax, myclobutanil, neoasozin, nickel dimethyldithiocarbamate, nitrothal-isopropyl, nuarimol, organomercury compounds, oxolinic acid, oxycarboxin, pefurazoate, penconazole, pencycuron, phenzin oxide, phosetyl-Al, phosphorus acids, phthalide, polyoxin D, polyram probenazole, prochloraz, procymidone, propamocarb, propamocart hydrochloride, propiconazole, propineb, propionic acid, prothiocarb, pyracarbolid, pyrazophos, pyrifenox, pyroquilon, pyoxyfur, pyrrolnitrin, quaternary ammonium, compounds, quinconazole, quinomethionate, rabenazole, sodium pentachlorophenolate, streptomycin, sulphur, tebuconazole, techlofthalam, tecnazene, tetraconazole, thiabendazole, thicarbanil, thicyofen, 2-(thio-dyanomethylthio)benzothiazole thiophanate-methyl, thiram, thimibencoazole, tolclofos-methyl, tolylfluanid, triacetate salt of 1,1'-iminodi-(octamethylene)diguanidine, triadimefon, triadimenol, triazbutyl, triazoxide, tricyclazole, tridemorph, triforine, triflumizole, triticonazle, validamycin A, vapam, vinclozolin, zineb, ziram, terbufos, carbofuran, chloropicrin, ethyl 3-methyl-4-(methylthio)phenyl (1-methylethyl)-phosphoramidate, ethoprop, aldicarb [2-methyl-2-(methylthio)-propionaldehyde 0-(methylcarbamoly)oxime], and oxamyl [methyl-N'N'-dimethyl-N-[methylcarbamoyl)-oxy]-1-thiooxamimidate].

Favorable mixing ratios of the two active principles bacterial biocontrol strain (= I) and the chemical compound (= II) are: I:II = 100:1 to 1:100, preferably 20:1 to 1:20. Other preferred ratios are 10:1 to 1:10; 5:1 to 1:5; 7:2 to 2:3.

The compositions of the present invention are effective, for example, against the phytopathogenic fungi belonging to the following classes: Ascomycetes, e.g., Fusarium; Basidiomycetes, e.g., Rhizoctonia; Oomycetes belonging to the class of Phycomycetes, e.g., Phytophthora, Pythium and Plasmopara. As plant protective agents, the compositions of the present invention can be used against important noxious fungi of the Fungi imperfecti family, e.g., Cercospora and Botrytis. Botrytis and the gray mould on vines, strawberries, apples, onions and other varieties of fruit and vegetables are a source of considerable economic damage. Thus, the compositions of the present invention may be particularly useful because they demonstrate excellent microbicidal activity against a wide spectrum of fungi. They control mold fungi such as Penicillium, Aspergillus, Rhizopus, Fusarium, Helminthosporium, Nigrospora and Alternaria, as well as bacteria such as butyric acid bacteria and yeast fungi such as Candida. Furthermore, the combinations of the present invention have excellent activity against fungi which occur in seeds or in the soil. As plant protective agents, the combinations are advantageous for practical application in agriculture for protecting cultivated plants, without damaging said plants by harmful side-effects.

Target crops to be protected within the scope of the present invention comprise e.g., the following species of plants: cereals (wheat, barley, maize, rye, oats, rice, sorghum and related crops), beet (sugar beet and fodder beet), pomes, drupes and soft fruit (apples, pears, plums, peaches, almonds, cherries, strawberries, raspberries and blackberries), leguminous plants (beans, lentils, peas, soybeans), oil plants (rape, mustard, poppy, olives, sunflowers, coconut, castor oil plants, cocoa beans, groundnuts), cucumber plants (cucumber, marrows, melons), fibre plants (cotton, flax, hemp, jute), citrus fruit (oranges, lemons, grapefruit, mandarins), vegetables (spinach, lettuce, asparagus, cabbages, carrots, onions, tomatoes, potatoes, paprika), lauraceae (avocados, cinnamon, camphor), or plants such as maize, tobacco, nuts, coffee, sugar cane, tea, vines, hops, bananas and natural rubber plants, as well as ornamentals (composites). The compositions may also be useful for storage protection of natural substances which are in freshly harvested or further processed form.

The biocontrol agents may be applied in any method known for treatment of seed or soil with bacterial strains. For example, see US Patent No. 4,863,866. The strains are effective for biocontrol even if the bacterium is not living. Preferred is, however, the application of the living bacterium.

The active ingredients may be used in unmodified form or together with any suitable agriculturally acceptable carrier. Such carriers are adjuvants conventionally employed in the art of agricultural formulation, and are therefore formulated in known manner to emulsifiable concentrates, coatable pastes, directly sprayable or dilutable solutions, dilute emulsions, wettable powders, soluble powders, dusts, granulates, and also encapsulations, for example, in polymer substances. Like the nature of the compositions, the methods of application, such as spraying, atomizing, dusting, scattering or pouring, are chosen in accordance with the intended objected and the prevailing circumstances. Advantageous rates of application are normally from about 50 g to about 5 kg of active ingredient (a.i.) per hectare ("ha", approximately 2.471 acres), preferably from about 100 g to about 2 kg a.i./ha. Important rates of application are about 200 g to about 1 kg a.i./ha and 200 g to 500 g a.i./ha.
For seed dressing advantageous application rates are 0.5 g to 1000 g a.i.per 100 kg seed, preferably 3 g to 100 g a.i. per 100 kg seed or 10 g to 50 g a.i.per 100 kg seed.

Preferred methods of applying an active ingredient of the present invention or an agrochemical composition of the present invention are leaf application, seed coating and soil application. The number of applications and the rate of application depend on the intensity of infestation by the corresponding pathogen (type of fungus). However, the active ingredients can also penetrate the plant through their roots via the soil (systemic action) by impregnating the locus of the plant with a liquid composition, or by applying the compounds in solid form to the soil, e.g. in granular form (soil application). The active ingredients may also be applied to seeds (coating) by impregnating the seeds either with a liquid formulation containing active ingredients, or coating then, with a solid formulation. In special cases, further types of application are also possible, for example, selective treatment of the plant stems or buds.

The formulations, compositions or preparations containing the active ingredients and, where appropriate, a solid or liquid adjuvant, are prepared in known manner, for example by homogeneously mixing and/or grinding the active ingredients with extenders, for example solvents, solid carriers and, where appropriate, surface-active compounds (surfactants).

Suitable solvents for compositions including those that contain the pesticidal metabolites produced by the biocontrol bacterial strains of the present invention include aromatic hydrocarbons, preferably the fractions having 8 to 12 carbon atoms, for example, xylene mixtures or substituted naphthalenes, phthalates such as dibutyl phthalate or dioctyl phthalate, aliphatic hydrocarbons such as cyclohexane or paraffins, alcohols and glycols and their ethers and esters, such as ethanol, ethylene glycol monomethyl or monethyl ether, ketones such as cyclohexanone, strongly polar solvents such as N-methyl-2-pyrrolidone, dimethyl sulfoxide or dimethyl formamide, as well as epoxidized vegetable oils such as epoxidized coconut oil or soybean oil; or water.

The solid carriers used e.g. for dusts and dispersible powders, are normally natural mineral fillers such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite; and suitable nonsorbent carriers are materials such as calcite or sand. In addition, a great number of pregranulated materials of inorganic or organic nature can be used, e.g. especially dolomite or pulverized plant residues.

Depending on the nature of the active ingredient to be used in the formulation, suitable surface-active compounds are nonionic, cationic and/or anionic surfactants having good emulsifying, dispersing and wetting properties. The term "surfactants" will also be understood as comprising mixtures of surfactants.

Suitable anionic surfactants can be both water-soluble soaps and water-soluble synthetic surface-active compounds.

Suitable soaps are the alkali metal salts, alkaline earth metal salts or unsubstituted or substituted ammonium salts of higher fatty acids (chains of 10 to 22 carbon atoms), for example the sodium or potassium salts of oleic or stearic acid, or of natural fatty acid mixtures which can be obtained for example from coconut oil or tallow oil. The fatty acid methyltaurin salts may be used.

More frequently, however, so-called synthetic surfactants are used, especially fatty sulfonates, fatty sulfates, sulfonated benzimidazole derivatives or alkylarylsulfonates.

The fatty sulfonates or sulfates are usually in the form of alkyli metal salts, alkaline earth metal salts or unsubstituted or substituted ammonium salts and have a 8 to 22 carbon alkyl radical which also includes the alkyl moiety of alkyl radicals, for example, the sodium or calcium salt of lignonsulfonic acid, of dodecylsulfate or of a mixture of fatty alcohol sulfates obtained from natural fatty acids. These compounds also comprise the salts of sulfuric acid esters and sulfonic acids of fatty alcohol/ethylene oxide adducts. The sulfonated benzimidazole derivatives preferably contain 2 sulfonic acid groups and one fatty acid radical containing 8 to 22 carbon atoms. Examples of alkylarylsulfonates are the sodium, calcium or triethanolamine salts of dodecylbenzenesulfonic acid, dibutylnaphthalene-sulfonic acid, or of anaphthalenesulfonic acid/formaldehyde condensation product. Also suitable are corresponding phosphates, e.g. salts are preferably in the form of halides, methylsulfates or ethylsulfates, e.g. stearyltrimethylammonium chloride or benzyldi(2-chloroethyl) ethylammonium bromide or salts of the phosphoric acid ester of an adduct of p-nonyl- phenol with 4 to 14 moles of ethylene oxide.

Non-ionic surfactants are preferably polyglycol ether derivatives of aliphatic or cycloaliphatic alcohols, or saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols.

Further suitable non-ionic surfactants are the water-soluble adducts of polyethylene oxide with polypropylene glycol, ethylenediamine propylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit.

Representative examples of non-ionic surfactants are nonylphenolpolyethoxyethanols, castor oil polyglycol ethers, polypropylene/polyethylene oxide adducts, tributylphenoxypolyethoxyethanol, polyethylene glycol and octylphenoxyethoxyethanol. Fatty acid esters of polyoxyethylene sorbitan and polyoxyethylene sorbitan trioleate are also suitable non-ionic surfactants.

Cationic surfactants are preferably quaternary ammonium salts which have, as N-substituent, at least one C₈-C₂₂alkyl radical and, as further substituents, lower unsubstituted or halogenated alkyl, benzyl or lower hydroxyalkyl radicals. The salts are preferably in the form of halides, methylsulfates or ethylsulfates, e.g. stearyltrimethylammonium chloride or benzyldi(2-chloroethyl)ethylammonium bromide.

The surfactants customarily employed in the art of formulation are described, for example, in "McCutcheon's Detergents and Emulsifiers Annual, "MC Publishing Corp. Ringwood, New Jersey, 1979, and Sisely and Wood, "Encyclopedia of Surface Active Agents, "Chemical Publishing Co., Inc. New York, 1980.

The agrochemical compositions usually contain from about 0.1 to about 99%, preferably about 0.1 to about 95%, and most preferably from about 3 to about 90% of the active ingredient, from about 1 to about 99.9%, preferably from about 1 to about 99%, and most preferably from about 5 to about 95% of a solid or liquid adjuvant, and from about 0 to about 25%, preferably about 0.1 to about 25%, and most preferably from about 0.1 to about 20% of a surfactant.

Whereas commercial products are preferably formulated as concentrates, the end user will normally employ dilute formulations.

### Formulation Examples

In the following examples, percentages of composition are given by weight. The active ingredient is a combination of a Pseudomonas fluorescens strain CGA 266446, CGA 266447, CGA 267356, CGA 270293, CGA 270294 or CGA 281836 with a synthetic chemical fungicide such as a halogenated nitrobenzene. [cfu = colony-forming units]

### Dusts

| | a) | b) |
|---|---|---|
| Active ingredient (incl. 10¹³ cfu/kg) | 5 % | 6 % |
| Talcum | 85 % | - |
| Kaolin | - | 84% |
| Residual moisture | 10 % | 10 % |

Ready-to-use dusts are obtained by mixing the active ingredient with the carrier. Such powders may be used as a composition for dry-dressing seeds.

### Extruder granules

| | |
|---|---|
| Active ingredient | 10 % (10¹³ cfu/kg) |
| Sodium ligninsulfonate | 2 % |
| Carboxymethylcellulose | 1 % |
| Kaolin | 77 % |
| Moisture | 10 % |

The active ingredient (organism + chemical) is mixed with the additives, and the mixture is ground and moistened with water. This mixture is extruded and subsequently dried in a stream of air.

### Coated granules

| | |
|---|---|
| Active ingredient | 3 % (10¹³ cfu/kg) |
| Polyethylene glycol (MW 200) | 3 % |
| Kaolin | 84 % |
| Water | 10 % |
| (MW = molecular weight) | |

In a mixer, the active ingredient is applied uniformly to the kaolin which has been moistened with polyethylene glycol. In this manner, dust-free coated granules are obtained.

### Suspension concentrate

| | |
|---|---|
| Active ingredient | 40 % (10¹⁰ cfu/kg) |
| Propylene glycol | 10 % |
| Nonylphenol polyethylene glycol ether (15 moles of ethylene oxide) | 6 % |
| Sodium ligninsulfonate | 10 % |
| Carboxymethyl cellulose | 1 % |
| Silicone oil (in the form of a 75 % aqueous emulsion) | 1 % |
| Water | 32 % |

The active ingredient (organism + chemical) is mixed intimately with the additives. This gives a suspension concentrate from which suspensions of any desired lower dilution can be prepared by dilution with water. Live plants and plant propagation material can be treated and protected from infestion with microorganisms by spraying them with such dilutions, pouring such dilutions or immersing the live plants or plant propagation material in such dilutions.

### Biological Examples

If the activity achieved by said combinations is decisively greater than the activity to be expected by adding together the activities of the components individually, there exists a synergistic effect of the combination.

In the following examples,
* = indicates the expected value of the additive effects of two treatments in the absence of synergy, as computed by the method described in Richer, Pestic. Sci, 19:309-315 (1987).
** = indicates that the result exceeds the expected value of the additive effects of the individual treatments, and therefore is considered to be synergistic.

### Example 1: Synergistic Effects of Combinations of Bacterial Biocontrol Strain CGA 267356 with quintozene (Pentachloronitrobenzene).

Soil is prepared by mixing potting soil (Metro-mix 360, WR Grace) with vermiculite and sand. 15 cm x 15 cm pots are filled with the soil mix, and 3/4" deep furrows are made near the perimeter of each pot. Thus, each pot contains a circular 12" furrow.

Stoneville 506 cotton seeds are obtained from the CIBA-GEIGY Delta Research Station. Quintozene suspensions are prepared at the following concentrations: 0.002 oz/10 ml (= 1x field use application rate recommended for cotton); 0.001 oz/10 ml (1/2x) and 0.0002 oz/10 ml (1/10x).

Strain CGA267356 is grown overnight in Luria broth at 28°C. Cells are centrifuged, then resuspended in sterile H₂0, and diluted in various proportions to give a range of cfu/ml dilutions. The 1x rate is defined as 20 ml of cell suspension at a concentration of 2 x 10⁹ colony-forming unites (cfu) /ml/ft.

Combination of bacterial strains and quintocene are tested as follows. The untreated seeds are placed in each furrow. Dried ground Rhizoctonia-infested millet powder is sprinkled evenly over the seeds in the furrows. 10 ml of quintocene or H₂0 are pipetted over the appropriate treatments, followed by 10 ml of CGA267356 or H₂0. Each treatment consists of three replicated pots for a total of 30 seeds per treatment.

The experiments are conducted in a phytotron set to a day/night temperature of 26/21°C. All pots are watered on day 7 and day 13 after planting.

Approximately two weeks (16 days) after planting, all plants are gently removed from the pots and the number of sympton-free plants is recorded. For each experiment, the percent control is calculated by comparison to the healthy check (no pathogen added, defined as 100% symptom-free) and the disease check (pathogen added, H₂0 treated only, defined as 0% sympton-free).

In theses experiments, both pre- and post-emergence damping-off occurs.

**Table 1**

| Control of Damping off of Cotton caused by Rhizoctonia solani: Synergism between quintozene (chemical seed treatment) and CGA 267356 (bacterial drench) | | |
|---|---|---|
| Treatment | E Value* | Actual Value |
| Disease check | | 0 |
| CGA267356 1x | | 84 |
| CGA267356 1/100x | | 23 |
| quintozene 1x | | 64 |
| quintozene 1/2x | | 60 |
| quintozene 1/10x | | 8 |
| quintozene 1x + CGA267356 1/100x | 72 | 86** |
| quintozene 1/2x + CGA267356 1/100x | 69 | 78** |
| quintozene 1/10x + CGA 267356 1/100x | 29 | 49** |

## Claims

1. A microbicidal composition which comprises, as active ingredients, an effective amount of at least one bacterial biocontrol strain of the genus *Pseudomonas* in combination with at least one synthetic microbicidal compound, together with a suitable carrier material, wherein the synthetic microbicidal compound is a halogenated nitrobenzene.

2. A composition according to claim 1 wherein the weight ratio of *Pseudomonas* strain(I):synthetic microbicide(II) is 100:1 to 1:100, preferably 20:1 to 1:20.

3. The composition of claim 1, wherein the microbicidal biocontrol strain is of the species *Pseudomonas fluorescens*.

4. The composition of claim 3, wherein said bacterial strain is selected from the group consisting of the following strains of *Pseudomonas fluorescens*
a) CGA 266446 (ATCC Accession No. 55171);
b) CGA 266447 (ATCC Accession No. 55170);
c) CGA 267356 (ATCC Accession No. 55169);
d) CGA 270293 (ATCC Accession No. 55175);
e) CGA 270294 (ATCC Accession No. 55174); and
f) CGA 281836 (ATCC Accession No. 55168).

5. The composition of claim 1, wherein the halogenated nitrobenzene is pentachloro-nitrobenzene.

6. A method of controlling or preventing infestation of cultivated plants by plant pathogenes, which method comprises applying to said plants, parts of plants, or to a locus thereof, in either sequence or simultaneously at least one microbicidal biocontrol strain of the genus *Pseudomonas* and at least one synthetic microbicidal compound, wherein the synthetic microbicidal compound is a halogenated nitrobenzene.

7. The method of claim 6, wherein the microbicidal biocontrol strain is of the species *Pseudomonas fluorescens*.

8. The method of claim 7, wherein said bacterial strain is selected from the group consisting of the following strains of Pseudomonas fluorescens:
a) CGA 266446 (ATCC Accession No. 55171);
b) CGA 266447 (ATCC Accession No. 55170);
c) CGA 267356 (ATCC Accession No. 55169);
d) CGA 270293 (ATCC Accession No. 55175);
e) CGA 270294 (ATCC Accession No. 55174); and
f) CGA 281836 (ATCC Accession No. 55168).

9. The method of claim 6, wherein the halogenated nitrobenzene is pentachloro-nitrobenzene.

10. The method of claim 6, wherein the parts of plants are seeds.

11. A dressed seed having reduced susceptibility to phytopathogenic fungi which is dressed according to the method of claim 6.

## Patentansprüche

1. Mikrobizide Zusammensetzung, die als Wirkstoffe eine wirksame Menge von mindestens einem Biokontroll-Bakterienstamm der Gattung Pseudomonas in Verbindung mit mindestens einer synthetischen mikrobiziden Verbindung und einen geeigneten Träger enthält, worin die synthetische mikrobizide Verbindung ein halogeniertes Nitrobenzol ist.

2. Zusammensetzung nach Anspruch 1, worin das Gewichtsverhältnis Pseudomonas-Stamm (I) : synthetisches, mikrobizides Mittel (II) 100:1 bis 1:100, vorzugsweise 20:1 bis 1:20 beträgt.

3. Zusammensetzung nach Anspruch 1, worin der mikrobizide Biokontroll-Stamm der Spezies Pseudomonas fluorescens angehört.

4. Zusammensetzung nach Anspruch 3, worin der Bakterienstamm ausgewählt ist aus der Gruppe bestehend aus den folgenden Pseudomonas fluorescens Stämmen:
a) CGA 266446 (ATCC Hinterlegungsnummer 55171),
b) CGA 266447 (ATCC Hinterlegungsnummer 55170),
c) CGA 267356 (ATCC Hinterlegungsnummer 55169),
d) CGA 270293 (ATCC Hinterlegungsnummer 55175),
e) CGA 270294 (ATCC Hinterlegungsnummer 55174), und
f) CGA 281836 (ATCC Hinterlegungsnummer 55168).

5. Zusammensetzung nach Anspruch 1, worin das halogenierte Nitrobenzol Pentachlornitrobenzol ist.

6. Verfahren zur Bekämpfung oder Verhinderung des Befalls von Kulturpflanzen durch Planzenschädlinge, welches umlaßt, Ausbringen mindestens eines Biokontroll-Stammes der Gattung Pseudomonas und mindestens einer synthetischen, mikrobiziden Verbindung in jeder Reihenfolge oder gleichzeitig, worin die synthetische mikrobizide Verbindung ein halogeniertes Nitrobenzol ist, auf Pflanzen, Pflanzenteile oder auf einen Ort davon.

7. Verfahren nach Anspruch 6, wobei der mikrobizide Biokontroll-Stamm der Spezies Pseudomonas fluorescens angehört.

8. Verfahren nach Anspruch 7, wobei der Bakterienstamm ausgewählt ist aus der Gruppe bestehend aus den folgenden Pseudomonas fluorescens Stammen:
a) CGA 266446 (ATCC Hinterlegungsnummer 55171),
b) CGA 266447 (ATCC Hinterlegungsnummer 55170),
c) CGA 267356 (ATCC Hinterlegungsnummer 55169),
d) CGA 270293 (ATCC Hinterlegungsnummer 55175),
e) CGA 270294 (ATCC Hinterlegungsnummer 55174), und
f) CGA 281836 (ATCC Hinterlegungsnummer 55168).

9. Verfahren nach Anspruch 6, wobei das halogenierte Nitrobenzol Pentachlornitrobenzol ist.

10. Verfahren nach Anspruch 6, wobei die Pflanzenteile Saatgut sind.

11. Behandeltes Saatgut mit verringerter Empfindlichkeit gegenüber phytopathogenen Pilzen, das gemäß dem Verfahren von Anspruch 6 behandelt wurde.

## Revendications

1. Une composition microbicide qui comprend, comme matières actives, une quantité efficace d'au moins une souche bactérienne pour la lutte biologique de l'espèce Pseudomonas en association avec au moins un composé microbicide synthétique, ensemble avec une matière véhiculeuse appropriée, où le composé microbicide synthétique est un nitrobenzène halogéné.

2. Une composition selon la revendication 1 où le rapport pondéral de la souche Pseudomonas(I) au microbicide synthétique (II) est de 100:1 à 1:100, de préférence de 20:1 à 1:20.

3. La composition selon la revendication 1, où la souche microbicide pour la lutte biologique est de l'espèce Pseudomonas fluorescens.

4. La composition selon la revendication 3, où ladite souche bactérienne est choisie parmi le groupe comprenant les souches de Pseudomonas fluorescens suivantes:
a) CGA 266446 (n° de dépôt 55171 auprès de l'ATCC);
b) CGA 266447 (n° de dépôt 55170 auprès de l'ATCC);
c) CGA 267356 (n° de dépôt 55169 auprès de l'ATCC);
d) CGA 270293 (n° de dépôt 55175 auprès de l'ATCC);
e) CGA 270294 (n° de dépôt 55174 auprès de l'ATCC); et
f) CGA 281836 (n° de dépôt 55168 auprès de l'ATCC).

5. La composition selon la revendication 1, où le nitrobenzène halogéné est le pentachloro-nitrobenzène.

6. Une méthode de lutte ou de prévention contre l'infestation des plantes cultivées par des pathogènes des plantes, ladite méthode comprenant l'application auxdites plantes, parties de plantes ou à leur lieu de croissance, dans n'importe quel ordre ou simultanément d'au moins une souche microbicide pour la lutte biologique de l'espèce Pseudomonas et d'au moins un composé microbicide synthétique, où le composé microbicide synthétique est un nitrobenzène halogéné.

7. La méthode selon la revendication 6, où la souche microbicide pour la lutte biologique est de l'espèce Pseudomonas fluorescens.

8. La méthode selon la revendication 7, où ladite souche bactérienne est choisie parmi le groupe comprenant les souches de Pseudomonas fluorescens suivantes:
a) CGA 266446 (n° de dépôt 55171 auprès de l'ATCC);
b) CGA 266447 (n° de dépôt 55170 auprès de l'ATCC);
c) CGA 267356 (n° de dépôt 55169 auprès de l'ATCC);
d) CGA 270293 (n° de dépôt 55175 auprès de l'ATCC);
e) CGA 270294 (n° de dépôt 55174 auprès de l'ATCC); et
f) CGA 281836 (n° de dépôt 55168 auprès de l'ATCC).

9. La méthode selon la revendication 6, où le nitrobenzène halogéné est le pentachloro-nitrobenzène.

10. La méthode selon la revendication 6, où les parties des plantes sont des semences.

11. Des semences traitées ayant une sensibilité réduite aux champignons phytopathogènes qui sont traitées selon la méthode de la revendication 6.
